# EUROPEAN PATENT SPECIFICATION

(11) **EP 4 033 440 B1**
(45) Date of publication and mention of the grant of the patent: **19.08.2026**
(21) Application number: 20866817.8
(22) Date of filing: 02.04.2020
(51) Int. Cl.: H04L 9/00, H04L 9/40

(54) **CONSENSUS METHOD, APPARATUS AND DEVICE OF BLOCK CHAIN**
CONSENSUS-VERFAHREN, -EINRICHTUNG UND -VORRICHTUNG EINER BLOCKCHAIN
PROCÉDÉ, APPAREIL ET DISPOSITIF DE CONSENSUS DE CHAÎNE DE BLOCS

(30) Priority: 17.09.2019 CN 201910875855
(43) Date of publication of application: 27.07.2022
(73) Proprietor: Jingdong Technology Information Technology Co., Ltd., Beijing 100176 (CN)
(72) Inventor: SHAO, Zhuguang, Beijing 100176 (CN)
(74) Representative: Barker Brettell LLP
(86) International application number: PCT/CN2020/082919
(87) International publication number: WO 2021/051782

(56) References cited:
- CN-A- 106 980 649
- CN-A- 107 678 865
- CN-A- 107 678 865
- CN-A- 107 688 999
- CN-A- 109 784 930
- CN-A- 109 784 930
- CN-A- 109 934 712
- CN-A- 110 570 311
- US-A1- 2018 060 836
- SAJJAD RIZVI ET AL: "Canopus : A Scalable and Massively Parallel Consensus Protocol", PROCEEDINGS OF THE 13TH INTERNATIONAL CONFERENCE ON EMERGING NETWORKING EXPERIMENTS AND TECHNOLOGIES , CONEXT '17; DECEMBER 12 - 15, 2017, 28 November 2017 (2017-11-28), New York, New York, USA, pages 426 - 438, XP055699014, ISBN: 978-1-4503-5422-6, DOI: 10.1145/3143361.3143394

## Description

### TECHNICAL FIELD

The present application relates to blockchain technologies, and particularly to a blockchain consensus method, an apparatus and a device.

### BACKGROUND

With the development of blockchain technologies, more and more data begin to use a blockchain for storing and interacting. The blockchain is also referred to as distributed ledger, and is essentially a decentralized distributed internet database.

In the blockchain technologies, a consensus mechanism is an important method for achieving trust establishment among different nodes in a blockchain network. Under different consensus mechanisms, blockchain consensus processes will be slightly different, but are all based on a serialized consensus manner. Specifically, a consensus node receives several pieces of transaction information and puts the information into a transaction pool, and the consensus node obtains a batch of transactions from the transaction pool and perform consensus on the batch of transactions. After the consensus on the batch of transactions is completed, a next batch of transactions are obtained from the transaction pool for performing consensus, and the above-mentioned processes are repeatedly performed.

For instance, "Canopus: A Scalable and Massively Parallel Consensus Protocol" discloses a highly-parallel consensus protocol that is "plug-compatible" with ZooKeeper.

CN109784930A discloses a method for processing blockchain transaction data. It discloses obtaining each transaction data in the block to be consensus; simultaneously processing a preset number of transaction data in a parallel manner; marking the transaction data with transaction conflict when processing in a parallel manner as conflict transaction data; and processing each conflicting transaction data arranged in the original time sequence in a serial manner.

However, the above-mentioned serialized consensus manner causes the consensus to be inefficient.

### SUMMARY

The present application provides a blockchain consensus method, an apparatus and a device, so as to increase consensus efficiency of blockchains.

The present invention is set out in the appended set of claims.

In a first aspect, the present application provides a blockchain consensus method, applied to a consensus node in a blockchain system, and the method includes:
dividing transaction information in a transaction pool into N transaction information sets, where N is a natural number greater than 1;
performing consensus on the N transaction information sets in parallel, to obtain a first consensus result corresponding to each transaction information set; and
determining, according to a first consensus result corresponding to a first i transaction information set, a second consensus result corresponding to an i-th transaction information set, where i takes 1, 2, ..., N-1 and N in sequence.

In a possible implementation, the determining, according to the first consensus result corresponding to the first i transaction information set, the second consensus result corresponding to the i-th transaction information set includes:
judging whether a first consensus result corresponding to the i-th transaction information set is a consensus success;
if yes, determining that the second consensus result corresponding to the i-th transaction information set is a consensus success when i is equal to 1; and determining a second consensus result corresponding to the (i-1)-th transaction information set as the second consensus result corresponding to the i-th transaction information set when i is greater than 1;
if no, determining that the second consensus result corresponding to the i-th transaction information set is a consensus failure.

In a possible implementation, after the determining, according to the first consensus result corresponding to the first i transaction information set, the second consensus result corresponding to the i-th transaction information set, further includes:
judging whether the second consensus result corresponding to the i-th transaction information set is a consensus success;
if yes, executing transaction information in the i-th transaction information set.

In a possible implementation, before the executing the transaction information in the i-th transaction information set, further includes:
grouping, according to an association relationship among the transaction information in the i-th transaction information set, multiple pieces of transaction information in the i-th transaction information set, to obtain M transaction information groups corresponding to the i-th transaction information set, where transaction information having an association relationship is located in a same transaction information group, and M is a natural number greater than 1; and
the executing the transaction information in the i-th transaction information set includes:
   executing the transaction information in the M transaction information groups corresponding to the i-th transaction information set in parallel.

In a possible implementation, the transaction information includes: a transaction identifier and a pre-transaction identifier; and the grouping, according to the association relationship among the transaction information in the i-th transaction information set, the multiple pieces of transaction information in the i-th transaction information set, to obtain the M transaction information groups corresponding to the i-th transaction information set includes:
judging whether a first transaction information group is existed in a created transaction information group, where the first transaction information group includes a pre-transaction identifier corresponding to a transaction identifier of a j-th piece of transaction information in the i-th transaction information set;
if yes, adding the j-th piece of transaction information to the first transaction information group;
if no, adding the j-th piece of transaction information to a second transaction information group, where the second transaction information group is any one of the created transaction information group or a newly created transaction information group; j takes 1, 2, ..., K in sequence, K is an number of the transaction information included in the i-th transaction information set, and the transaction information in the i- th transaction information set is arranged in an ascending order of transaction time.

In a possible implementation, the adding the j-th piece of transaction information to the second transaction information group includes:
judging whether a number of the created transaction information group is greater than a first threshold;
if yes, determining the second transaction information group in the created transaction information group, and adding the j-th piece of transaction information to the second transaction information group;
if no, creating a new transaction information group, and adding the j-th piece of transaction information to the new transaction information group, where the new transaction information group is the second transaction information group.

In a possible implementation, the determining the second transaction information group in the created transaction information group includes:
obtaining an amount of transaction information existing in respective created transaction information group; and
determining, according to the amount of the transaction information existing in respective created transaction information group, the second transaction information group in the created transaction information groups, where an amount of transaction information existing in the second transaction information group is less than a second threshold.

In a second aspect, the present application provides a blockchain consensus apparatus, including:
a dividing module, configured to divide transaction information in a transaction pool into N transaction information sets, where N is a natural number greater than 1;
a processing module, configured to perform consensus on the N transaction information sets in parallel, to obtain a first consensus result corresponding to each transaction information set;
the processing module is further configured to determine, according to a first consensus result corresponding to a first i transaction information set, a second consensus result corresponding to an i-th transaction information set, where i takes 1, 2, ..., N-1 and N in sequence.

In a possible implementation, the processing module is specifically configured to:
judge whether a first consensus result corresponding to the i-th transaction information set is a consensus success;
if yes, determine that the second consensus result corresponding to the i-th transaction information set is a consensus success when i is equal to 1; and determine a second consensus result corresponding to the (i-1)-th transaction information set as the second consensus result corresponding to the i-th transaction information set when i is greater than 1;
if no, determine that the second consensus result corresponding to the i-th transaction information set is a consensus failure.

In a possible implementation, the processing module is further configured to:
judge whether the second consensus result corresponding to the i-th transaction information set is a consensus success;
if yes, execute transaction information in the i-th transaction information set.

In a possible implementation, the processing module is further configured to: group, according to an association relationship among the transaction information in the i-th transaction information set, multiple pieces of transaction information in the i-th transaction information set, to obtain M transaction information groups corresponding to the i-th transaction information set, where transaction information having an association relationship is located in a same transaction information group, and M is a natural number greater than 1; and
execute the transaction information in the M transaction information groups corresponding to the i-th transaction information set in parallel.

In a possible implementation, the transaction information includes: a transaction identifier and a pre-transaction identifier; and the processing module is specifically configured to:
judge whether a first transaction information group is existed in a created transaction information group, where the first transaction information group includes a pre-transaction identifier corresponding to a transaction identifier of a j-th piece of transaction information in the i-th transaction information set;
if yes, add the j-th piece of transaction information to the first transaction information group;
if no, add the j-th piece of transaction information to a second transaction information group, where the second transaction information group is any one of the created transaction information group or a newly created transaction information group; j takes 1, 2, ..., and K in sequence, K is a number of the transaction information included in the i-th transaction information set, and the transaction information in the i- th transaction information set is arranged in an ascending order of transaction time.

In a possible implementation, the processing module is specifically configured to:
judge whether a number of the created transaction information group is greater than a first threshold;
if yes, determine the second transaction information group in the created transaction information group, and add the j-th piece of transaction information to the second transaction information group;
if no, create a new transaction information group, and add the j-th piece of transaction information to the new transaction information group, where the new transaction information group is the second transaction information group.

In a possible implementation, the processing module is specifically configured to:
obtain an amount of transaction information existing in respective created transaction information group;
determine, according to the amount of the transaction information existing in respective created transaction information group, the second transaction information group in the created transaction information groups, where an amount of the transaction information existing in the second transaction information group is less than a second threshold.

In a third aspect, the present application provides a consensus device, including: a memory, a processor and a computer program, where the computer program is stored in the memory, and the processor runs the computer program to execute the method according to any one of the first aspect.

In a fourth aspect, the present application provides a computer-readable storage medium including a computer program, the method according to any one of the first aspect is implemented when the computer program is executed by a processor.

In a fifth aspect, the present application provides a computer program product which can be executed by a processor, the method according to any one of the first aspect is implemented when the computer program product is executed.

In a sixth aspect, the present application provides a chip, including: a memory, a processor and a computer program, where the computer program is stored in the memory, and the processor runs the computer program to execute the method according to any one of the first aspect.

In the blockchain consensus method, the apparatus and the device provided by the present application, the method includes: dividing, by a consensus node, transaction information in a transaction pool into N transaction information sets; performing consensus on the N transaction information sets in parallel, to obtain a first consensus result corresponding to each transaction information set; and determining, according to a first consensus result corresponding to a first i transaction information set, a second consensus result corresponding to an i-th transaction information set, where i takes 1, 2, ..., N-1 and N in sequence. Since the second consensus result corresponding to the i-th transaction information set is determined according to the first consensus result corresponding to the first i transaction information set, the accuracy of the consensus results thus can be ensured. Moreover, under the premise of ensuring the accuracy of the consensus results, performing consensus on the N transaction information sets in the transaction pool in parallel is realized, consensus efficiency is increased, and thereby an overall performance of a blockchain network can be improved.

### BRIEF DESCRIPTION OF DRAWINGS

In order to more clearly illustrate technical solutions in embodiments of the present application or in the prior art, drawings that need to be used in description of the embodiments or the prior art will be briefly introduced below, it is obvious that the drawings in the following description are merely some embodiments of the present application, and for those of ordinary skill in the art, other drawings can be obtained according to these drawings without paying creative labor.
FIG. 1 is a schematic diagram of a consensus process in the prior art;
FIG. 2 is a schematic flowchart of a blockchain consensus method provided by an embodiment of the present application;
FIG. 3 is a schematic diagram of a consensus process provided by an embodiment of the present application;
FIG. 4 is a schematic flowchart of a blockchain consensus method provided by an embodiment of the present application;
FIG. 5 is a schematic flowchart of a process of grouping the transaction information provided by an embodiment of the present application;
FIG. 6 is a schematic diagram of transaction information groups provided by an embodiment of the present application;
FIG. 7 is a schematic diagram of a blockchain consensus process provided by an embodiment of the present application;
FIG. 8 is a structure schematic diagram of a blockchain consensus apparatus provided by an embodiment of the present application; and
FIG. 9 is a structure schematic diagram of a consensus device provided by an embodiment of the present application.

### DESCRIPTION OF EMBODIMENTS

Technical solutions in embodiments of the present application will be clearly and completely described below in conjunction with drawings in the embodiments of the present application, it is obvious that the described embodiments are merely a part of embodiments of the present application, rather than all embodiments. Based on the embodiments in the present application, all other embodiments obtained by those of ordinary skill in the art without paying creative labor shall fall within the present application.

Terms "first", "second", "third", "fourth", etc.(if any) in the Description, the Claims and the above-mentioned drawings of the present application are used for distinguishing similar objects, and do not necessarily being used to describe a specific order or sequence. It should be understood that data used in this way may be interchanged under appropriate circumstances, so that the embodiments of the present application described herein can, for example, be implemented in an order other than those illustrated or described herein. In addition, terms "include", "have" and any variations thereof are intended to cover a non-exclusive inclusion, for example, processes, methods, systems, products or devices including a series of steps or units do not necessarily being limited to those steps or units clearly listed, but can include other steps or units that are not clearly listed or are inherent to these processes, methods, products or devices.

In blockchain technologies, a consensus mechanism is an important method for achieving trust establishment among different nodes in a blockchain network. Consensus mechanisms used by different blockchain networks may be different, and the consensus mechanisms include, but are not limited to: proof of work (POW), proof of stake (POS), delegated proof of stake (DPOS), practical byzantine fault tolerance (PBFT), proof of importance (POI), proof of participation (POP), etc. However, the consensus mechanisms have a similar consensus process, and are all based on a serialized consensus manner.

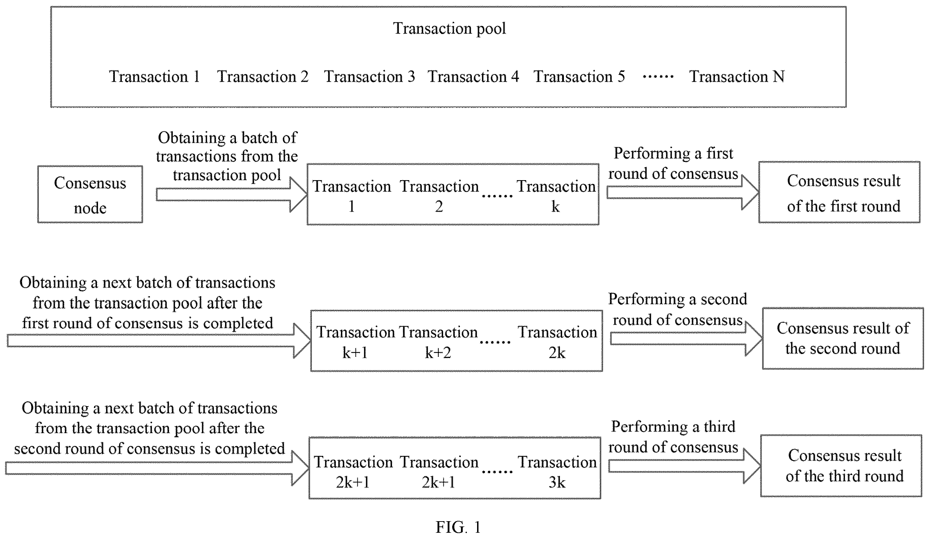

FIG. 1 is a schematic diagram of a consensus process in the prior art. As shown in FIG. 1, a consensus node receives transaction information from other nodes or user terminals, and puts the transaction information into a transaction pool Referring to FIG. 1, there may be a large amount of transaction information in the transaction pool (e.g.: transaction 1, transaction 2, ..., transaction N), and the transaction information in the transaction pool is stored in order, for example, is stored in accordance with time orders of the transactions.

Since there are time orders among the transaction information in the transaction pool, for example, transaction 1 is performed before transaction 2, there may be a dependency relationship between transaction 2 and transaction 1. When performing consensus on the transactions, the consensus node needs to perform consensus on the transactions in order. Assuming that the number of transactions on which the consensus node performs a round of consensus is k, then a first batch of transactions that the consensus node obtains from the transaction pool is transaction 1, transaction 2, ..., transaction k. The consensus node performs a first round of consensus on the first batch of transactions, to obtain a consensus result of the first round of consensus. After the first round of consensus is completed, the consensus node obtains a second batch of transactions from the transaction pool, for example, transaction k+1, transaction k+2, ..., transaction 2k. The consensus node performs a second round of consensus on the second batch of transactions, to obtain a consensus result of the second round of consensus. After the second round of consensus is completed, the consensus node obtains a third batch of transactions from the transaction pool, for example, transaction 2k+1, transaction 2k+2, ..., transaction 3k. The consensus node performs a third round of consensus on the third batch of transactions, to obtain a consensus result of the third round of consensus. Then, subsequent consensus processes are performed continuously, and it is understandable that the subsequent consensus processes are similar to the above-mentioned process, and will not be repeated herein.

It should be noted that consensus processes corresponding to different consensus mechanisms may be slightly different, for example, an agreement may be made on the number of transactions for each round of consensus, or an agreement may be made on time intervals between each round of consensus. FIG. 1 takes k transactions in each round of consensus as an example.

It can be seen from FIG. 1 that in existing consensus processes, when a consensus node performs consensus on transactions, it is based on a serialized consensus manner. In other words, it is necessary to wait for a completion of a previous round of consensus before starting a next round of consensus. The serialized consensus manner makes the consensus process become simple, and only requires to perform consensus in the order of the transactions. However, the serialized consensus manner causes consensus to be inefficient, and thereby reduces an overall performance of a blockchain network.

In order to solve the above-mentioned problems, the present application provides a blockchain consensus method, and in a process of performing consensus on transactions, the consensus node adopts a parallelized consensus manner, which increases consensus efficiency without affecting accuracy of consensus results, and thereby improves an overall performance of a blockchain network.

The technical solutions of the present application are described in detail below by way of specific embodiments. The following several specific embodiments can be combined with each other, and same or similar concepts or processes may not be repeated in some embodiments.

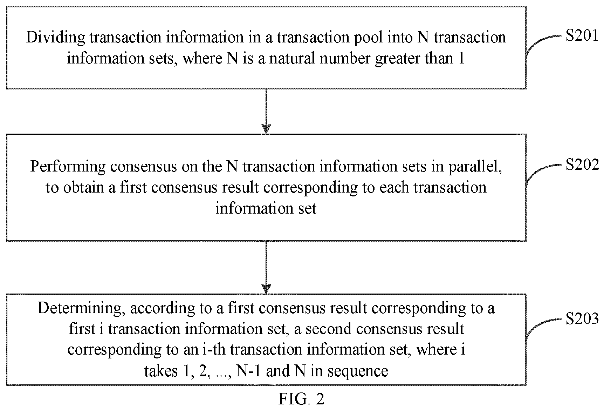

FIG. 2 is a schematic flowchart of a blockchain consensus method provided by an embodiment of the present application. The method of the present embodiment can be executed by a consensus node in a blockchain. A blockchain system can include multiple consensus nodes. The consensus method in the present embodiment can be executed by any consensus node among them.

The consensus node refers to a device used for performing consensus on transactions in a blockchain. Exemplarily, the consensus node may be a personal computer, a computer cluster, a mobile phone, a tablet computer, a smart wearable device, a vehicle-mounted device, etc.

As shown in FIG. 2, the method of the present embodiment includes:
S201: dividing transaction information in a transaction pool into N transaction information sets, where N is a natural number greater than 1.
S202: performing consensus on the N transaction information sets in parallel, to obtain a first consensus result corresponding to each transaction information set.
S203: determining, according to a first consensus result corresponding to a first i transaction information set, a second consensus result corresponding to an i-th transaction information set, where i takes 1, 2, ..., N-1 and N in sequence.

In the present embodiment, the transaction pool refers to a buffer pool used for caching transaction information. The transaction information sent by a transaction submission node to the consensus node is put into the transaction pool for caching. Each transaction information in the transaction pool is stored in time order of the transactions. Among them, the transaction submission node refers to a node that generates the transaction information, for example, it may be a user terminal, may also be other nodes except the consensus node in the blockchain system.

In S201, there may be various implementations for the consensus node to divide the transaction information in the transaction pool into N transaction information sets. In a possible implementation, the division is carried out in accordance with a preset amount, for example, every k pieces of transaction information may be divided into one set in accordance with the order of the transaction information in the transaction pool, and in the light of this kind of division manner, the amount of the transaction information in each set is k. In another possible implementation, the division can by carried out in accordance with time ranges within which the transaction information is located. For example, the transaction information within time period 1 is taken as set 1, the transaction information within time period 2 is taken as set 2, and in the light of this kind of division manner, the amount of transaction information in different sets may be different.

It is understandable that for different consensus mechanisms, manners for dividing transaction information in the transaction pool may be different. Optionally, the division can be made according to the maximum number of transaction information in each round of consensus specified by the transaction mechanisms. For different division manners, values of N may also be different, the present embodiment does not limit the value of N, and it can be selected according to practical application scenes.

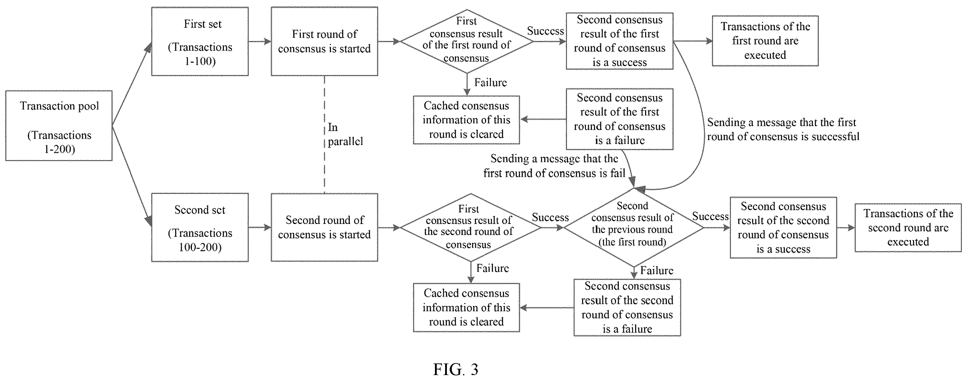

FIG. 3 is a schematic diagram of a consensus process provided by an embodiment of the present application. As shown in FIG. 3, assuming that the maximum number of transaction information in each round of consensus is 100, and there are a total of 200 pieces of transaction information in a transaction pool, then the transaction information in the transaction pool may be divided into 2 sets. A first set includes transactions 1-100, and a second set includes transactions 101-200. It is obvious that other division manners may also be adopted, which is not limited in the present embodiment.

In S202, after dividing the transaction information in the transaction pool into N transaction information sets, the consensus node can perform consensus on the N transaction information sets in parallel. In other words, for each transaction information set, a round of consensus is performed, and these N rounds of consensus are performed in parallel.

Exemplarily, in conjunction with the example shown in FIG. 3, after the transaction information in the transaction pool is divided into two sets, a first round of consensus is performed on the transaction information in the first set, and a second round of consensus is performed on the transaction information in the second set. The consensus node performs these two rounds of consensus in parallel. For example, the consensus node can adopt two independent modules or threads to perform these two rounds of consensus. In this way, first consensus results of the two rounds of consensus are obtained respectively.

The first consensus result in the present embodiment refers to a result obtained by performing consensus on the transaction information in the transaction information set corresponding to the current round of consensus. In other words, the first consensus result does not consider a consensus result of transaction information before the current round of consensus. Referring to FIG. 3, the first consensus result of the first round of consensus indicates a result obtain by performing consensus on transactions 1-100. The first consensus result of the second round of consensus indicates a result obtained by performing consensus on transactions 101-200.

It should be noted that the present embodiment does not specifically limit execution processes of each round of consensus, and consensus can be performed on transaction information in a set according to existing consensus algorithms. Consensus execution processes corresponding to different consensus algorithms may also be different. It is understandable that the first consensus result of each round of consensus is determined by using a consensus algorithm.

In practical applications, transactions 101-200 of the second round of consensus may depend on transactions 1-100 of the first round of consensus, in this way, a final consensus result of the second round of consensus actually depends on the consensus result of the first round of consensus. Therefore, in the present embodiment, by adopting S203, after performing consensus on the N transaction information sets in parallel, to obtain the first consensus results of the N transaction information sets, second consensus results of the N transaction information sets are obtained according to the first consensus results of the N transaction information sets and taking into consideration of dependency relationships among the N transaction information sets. Among them, the second consensus result refers to a consensus result obtained after considering dependency relationships among the transactions. In other words, the second consensus result indicates a final consensus result obtained after performing an overall consensus on the transaction information in the transaction pool

It is understandable that a second consensus result of the i-th transaction information set is related to the first consensus results of the first i transaction information sets. In other words, the second consensus result corresponding to the i-th transaction information set can be determined according to the first consensus results corresponding to the first i transaction information sets. Among them, i is a natural number less than or equal to N.

The following takes the i-th transaction information set as an example, to describe a process of determining the second consensus result corresponding to the i-th transaction information set. At first, judging whether the first consensus result corresponding to the i-th transaction information set is a consensus success; if yes, determining that the second consensus result corresponding to the i-th transaction information set is a consensus success when i is equal to 1; and determining the second consensus result corresponding to the (i-1)-th transaction information set as the second consensus result corresponding to the i-th transaction information set when i is greater than 1; if no, determining that the second consensus result corresponding to the i-th information transaction set is a consensus failure.

In other words, when i=1 (that is, for the first transaction information set), the first consensus result of the first transaction information set is directly taken as the second consensus result of the first transaction information set. For example, if the first consensus result of the first transaction information set is a success, then it is determined that the second consensus result of the first transaction information set is a success; and if the first consensus result of the first transaction information set is a failure, then it is determined that the second consensus result of the first transaction information set is a failure. When i>1, if the first consensus result of the i-th transaction information set is a failure, then it is determined that the second consensus result of the i-th transaction information set is a failure. If the first consensus result of the i-th transaction information set is a success, then the second consensus result of the (i-1)-th transaction information set is taken as the second consensus result of the i-th transaction information set (that is, if the second consensus result of the (i-1)-th transaction information set is a success, then it is determined that the second consensus result of the i-th transaction information set is a success; and if the second consensus result of the (i-1)-th transaction information set is a failure, then it is determined that the second consensus result of the i-th transaction information set is a failure).

In conjunction with FIG. 3, the consensus node performs the first round of consensus to obtain the first consensus result of the first round of consensus, since it is the first round of consensus, the first consensus result of this round is directly taken as the second consensus result of this round, and the second consensus result is sent to the second round of consensus. After the consensus node performs the second round of consensus to obtain the first consensus result of this round, the second consensus result of the second round is determined according to the first consensus result of this round and the received second consensus result of the first round of consensus. If the first consensus result of the second round of consensus is a failure, then it is determined that the second consensus result of the second round is a failure; and if the first consensus result of the second round of consensus is a success, then the second consensus result of the first round of consensus is taken as the second consensus result of the second round of consensus (that is, if the second consensus result of the first round of consensus is a success, then the second consensus result of the second round of consensus is also a success; and if the second consensus result of the first round of consensus is a failure, then the second consensus result of the second round of consensus is also a failure).

In a possible implementation, as shown in FIG. 3, in the case that the consensus result of a certain round of consensus is a failure, the cached information generated during the consensus processes needs to be cleared, to avoid affecting subsequent consensus processes.

In a possible implementation, for each round of consensus in N rounds of consensus, for example, for the i-th round of consensus, if the second consensus result of the i-th round of consensus is a success, then the transaction information in the transaction information set corresponding to the i-th round of consensus is executed. As shown in FIG. 3, in the case that the second consensus result of the first round of consensus is a success, the consensus node executes the transaction information in the first set. In the case that the second consensus result of the second round of consensus is a success (that is, the first consensus result of the transaction information in the second round is a success, and the second consensus result of the first round of consensus is a success), the consensus node executes the transaction information in the second set.

The blockchain consensus method provided in the present embodiment includes: dividing transaction information in a transaction pool into N transaction information sets; performing consensus on the N transaction information sets in parallel, to obtain a first consensus result corresponding to each transaction information set; and determining, according to a first consensus result corresponding to a first i transaction information set, a second consensus result corresponding to an i-th transaction information set, where i takes 1, 2, ..., N-1 and N in sequence. Since the second consensus result of the i-th transaction information set is determined according to the first consensus result of the first i transaction information set, the accuracy of the consensus results thus can be ensured. Moreover, under the premise of ensuring the accuracy of the consensus results, performing consensus on the N transaction information sets in the transaction pool in parallel is realized, consensus efficiency is increased, and thereby an overall performance of a blockchain network can be improved.

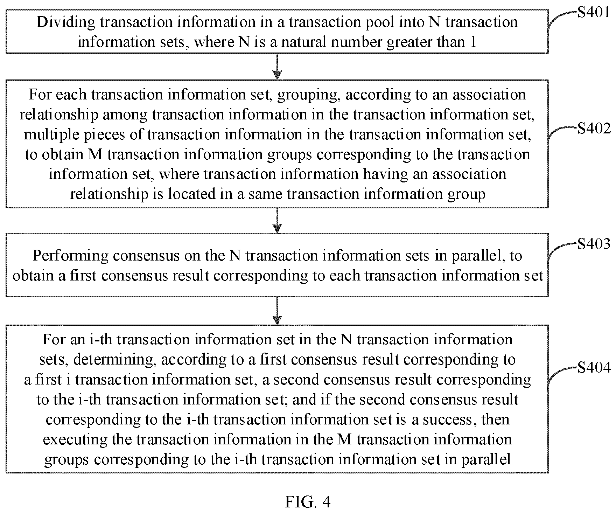

On a basis of the above-mentioned embodiments, for each transaction information set, if the second consensus result of the transaction information set is a consensus success, the transaction information in the transaction information set needs to be executed, so that the transaction information in the transaction information set is written into a block. It should be noted that in practical applications, transaction information in each transaction information set can be written into one block, and may also be written into multiple blocks, which is not limited in the present embodiment. In the present embodiment, in order to further increase execution efficiency of transaction information, the transaction information in each transaction information set may also be further divided into multiple transaction information groups. In this way, when transaction information in the transaction information set is executed, multiple transaction information groups can be executed in parallel, thereby execution efficiency is increased. A detailed description will be given below in conjunction with the embodiment shown in FIG. 4.

FIG. 4 is a schematic flowchart of a blockchain consensus method provided by an embodiment of the present application. As shown in FIG. 4, the method of the present embodiment includes:
S401: dividing transaction information in a transaction pool into N transaction information sets, where N is a natural number greater than 1.

For specific implementation of S401 in the present embodiment, reference may be made to detailed description of S201, which will not be repeated herein.

S402: for each transaction information set, grouping, according to an association relationship among transaction information in the transaction information set, multiple pieces of transaction information in the transaction information set, to obtain M transaction information groups corresponding to the transaction information set, where transaction information having an association relationship is located in a same transaction information group.

The association relationship may refer to a dependency relationship between transaction information. For example: transaction 1 is a transfer of 100CNY from A to B, and transaction 2 is a transfer of 100CNY from B to C. Then transaction 2 must be executed after transaction 1 is executed, that is, transaction 1 is a pre-transaction of transaction 2, and in this case, it is believed that there is a dependency relationship between transaction 1 and transaction 2. It is obvious that the association relationship may also refer to other relationships between transaction information, which is not specifically limited in the present embodiment. In the following examples, the dependency relationship between transaction information is taken as an example for description.

In the present embodiment, when grouping, according to the association relationship among the transaction information, multiple pieces of transaction information in the transaction information set, transaction information having an association relationship is divided into one group, and transaction information having no association relationship can be divide into different groups.

In the present embodiment, the number M of transaction information groups divided for each transaction information set is not specifically limited. The number of transaction information groups divided for different transaction information sets may be the same, and may also be different.

S403: performing consensus on the N transaction information sets in parallel, to obtain a first consensus result corresponding to each transaction information set.

The specific implementation of S403 in the present embodiment is similar to S202 in the embodiment shown in FIG. 2, and will not be repeated herein.

S404: for an i-th transaction information set in the N transaction information sets, determining, according to a first consensus result corresponding to a first i transaction information set, a second consensus result corresponding to the i-th transaction information set; and if the second consensus result corresponding to the i-th transaction information set is a success, then executing the transaction information in the M transaction information groups corresponding to the i-th transaction information set in parallel Said i takes 1, 2, ..., N-1 and N in sequence.

In the present embodiment, the process of determining the second consensus result of the i-th transaction information set is similar to that of the embodiment shown in FIG. 2, and will not be repeated herein. When it is determined that the second consensus result of the i-th transaction information set is a consensus success, then the M transaction information groups in the i-th transaction information set are executed in parallel

It is understandable that in the present embodiment, each transaction information set is divided to obtain M transaction information groups, and after the above-mentioned grouping, since transaction information having an association relationship is located in a same transaction information group and transaction information among different transaction information groups does not have an association relationship, executing transactions for multiple transaction information groups in parallel can ensure the accuracy of execution results. Exemplarily, the consensus node can adopt multiple independent modules or threads to execute transactions on M transaction information groups in parallel, and thereby write the transaction information in the M transaction information groups into a block. Among them, the transaction information in the M transaction information groups can be written into a same block, and may also be written into different blocks, which can be specifically determined according to blocking rules of different blockchain networks.

It should be noted that execution processes for transaction information in each transaction information group is similar to that of the prior art, that is, for each transaction information group, transaction information thereof can be executed in sequence in a serial manner, to ensure accuracy of transaction execution results.

In the present embodiment, not only a parallel consensus on N transaction information sets is realized in a consensus phase, which increases consensus efficiency, but also a parallel execution of M transaction information groups in each transaction information set is realized in a transaction execution phase, which increases transaction execution efficiency, thereby further improves an overall performance of a blockchain network.

The process of grouping multiple pieces of transaction information in each transaction information set in S402 is described in detail below in conjunction with a specific embodiment.

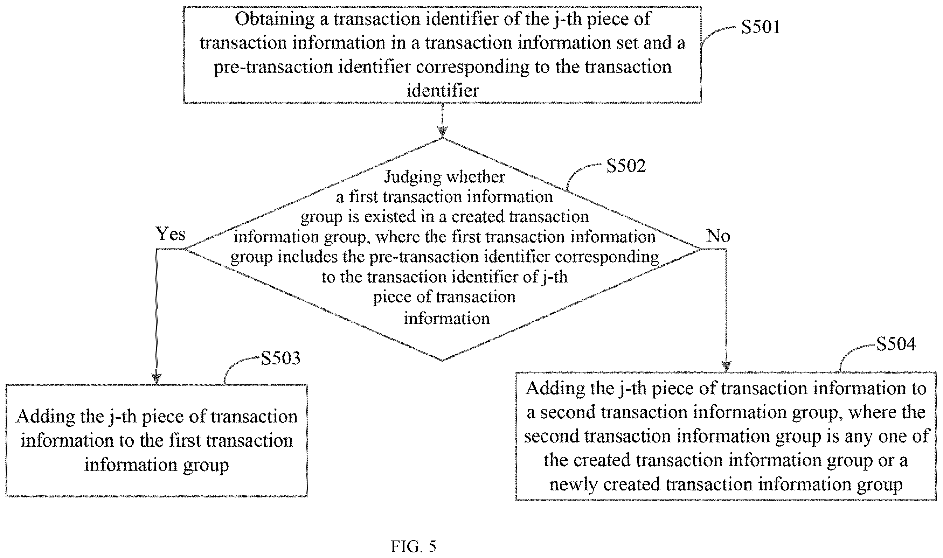

FIG. 5 is a schematic flowchart of a process of grouping transaction information provided by an embodiment of the present application. The present embodiment describes the process of grouping a j-th piece of transaction information in a transaction information set, and it is understandable that a grouping process of the transaction information set can be realized by traversing each piece of transaction information in the transaction information set and executing the method of the present embodiment for each piece of transaction information. Among them, j takes 1, 2, ..., K in sequence, where K is the amount of the transaction information in the transaction information set.

As shown in FIG. 5, the method of the present embodiment includes:
S501: obtaining a transaction identifier of the j-th piece of transaction information in a transaction information set and a pre-transaction identifier corresponding to the transaction identifier.

Each transaction information includes: a transaction identifier and a pre-transaction identifier corresponding to the transaction identifier. Among them, the pre-transaction refers to a transaction that must be carried out before the present transaction. The pre-transaction can also be referred to as dependency transaction.

The transaction identifier in the present embodiment refers to any identifier that can uniquely indicate the present transaction. For example, an output of an unspent transaction output (UTXO) model can be used as a transaction identifier, and keys of other specified rules can also be used as transaction identifiers.

S502: judging whether a first transaction information group is existed in a created transaction information group, where the first transaction information group includes the pre-transaction identifier corresponding to the transaction identifier of j-th piece of transaction information. If yes, going to S503; if no, going to S504.

S503: adding the j-th piece of transaction information to the first transaction information group.

S504: adding the j-th piece of transaction information to a second transaction information group, where the second transaction information group is any one of the created transaction information group or a newly created transaction information group.

In the present embodiment, before grouping, an empty transaction information group can be created at first. Then, each piece of transaction information in a transaction information set is traversed to execute the above-mentioned S501 to S504. The pre-transaction identifier corresponding to the transaction identifier of the transaction information is obtained. The created transaction information group is traversed to judge whether the pre-transaction identifier is existed in each created transaction information group. If the pre-transaction identifier does not exist in all of the created transaction information groups, then the transaction information is added to any transaction information group of the created transaction information groups, or a new transaction information group is created and the transaction information is added to the new transaction information group. If the pre-transaction identifier is existed in one of the transaction information groups, then the transaction information is added to the transaction information group within which the pre-transaction identifier is located.

In practical applications, for most business scenes, there are no strict requirements for a blocking (packaging transactions into blocks) behavior (e.g., how many transactions are packed into one block, or transactions within how much time are packed into one block). Therefore, for the above-mentioned transaction grouping processes, the present embodiment does not specifically limit on how many transactions are divided into one group and how many groups are divided. In practical applications, the number of groups may be appropriately increased and the number of transactions in each group may be appropriately decreased according to practical situations, in this way, parallelism of each round of consensus is increased, and consensus efficiency is increased.

In a possible implementation, the consensus node can adopt a configuration strategy to configure a first threshold and a second threshold in advance. Among them, the first threshold is used to indicate the maximum number of transaction information groups, and the second threshold is used to indicate the maximum number of transaction information in each transaction information group. It is understandable that the specific values of the first threshold and the second threshold can be flexibly adjusted according to practical application scenes.

In a possible implementation, if the pre-transaction identifier corresponding to the transaction identifier of the current transaction information is not existed in all of the created transaction information groups, in S504, whether the number of the created transaction information groups being greater than or equal to the first threshold may be judged at first; if no, then it means that the number of the transaction information groups has not reached the maximum number of groups; and in order to increase parallelism, a new transaction information group can be created, and the transaction information can be added to the new transaction information group. If yes, then it means that the number of transaction information groups has reached the maximum number of groups, therefore, no new transaction information group is created, but a second transaction information group is determined in the created transaction information groups, and the transaction information is added to the second transaction information group. It is understandable that since the transaction information does not have a pre-transaction, that is, there is no association relationship between the transaction information and other transaction information, therefore, adding the transaction information to any transaction information group will not affect transaction execution results.

Furthermore, when determining the second transaction information group in the created transaction information groups, the second transaction information group may also be determined according to the amount of transaction information in each transaction information group. Exemplarily, the amount of transaction information existing in respective created transaction information group is obtained, candidate transaction information groups whose amount of existing transaction information being less than the second threshold are found out, and one of the candidate transaction information groups is selected as the second transaction information group. In this way, it can be ensured that the amount of transaction information in each transaction information group does not exceed the maximum threshold, and the amount of transaction information in each transaction information group can also be balanced as much as possible.

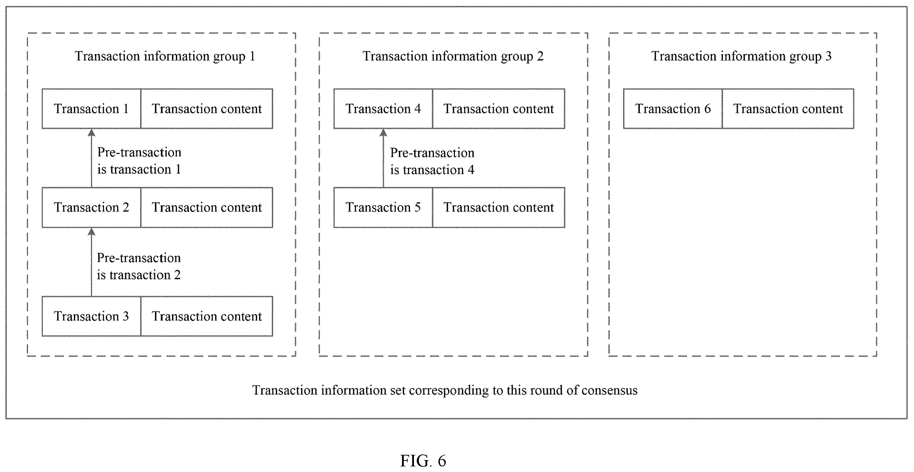

In accordance with the above-mentioned method, after traversing all the transaction information in the transaction information set, all the transaction information is divided into different transaction information groups. Exemplarily, FIG. 6 is a schematic diagram of transaction information groups provided by an embodiment of the present application. As shown in FIG. 6, assuming that there are 6 pieces of transaction information, and transaction identifiers of each piece of transaction information are Key1, Key2, Key3, Key4, Key5 and Key6 respectively. Among them, a pre-transaction of transaction 2 (Key2) is transaction 1 (Key1), a pre-transaction of transaction 3 (Key3) is transaction 2 (Key2), and a pre-transaction of transaction 5 (Key5) is transaction 4 (Key4). After complying with the above-mentioned grouping process, three transaction information groups are obtained, referring to FIG. 6, transaction information group 1 includes transaction 1 (Key1), transaction 2 (Key2) and transaction 3 (Key3), transaction information group 2 includes transaction 4 (Key4) and transaction 5 (Key5), and transaction information group 3 includes transaction 6 (Key6). In conjunction with FIG. 6, after the above-mentioned grouping, it is ensured that transaction information in each transaction information group is stored in accordance with the association relationships among the transactions. In other words, transaction information having an association relationship is located in one transaction information group, and transaction information having no dependency relationship can be located in different transaction information groups.

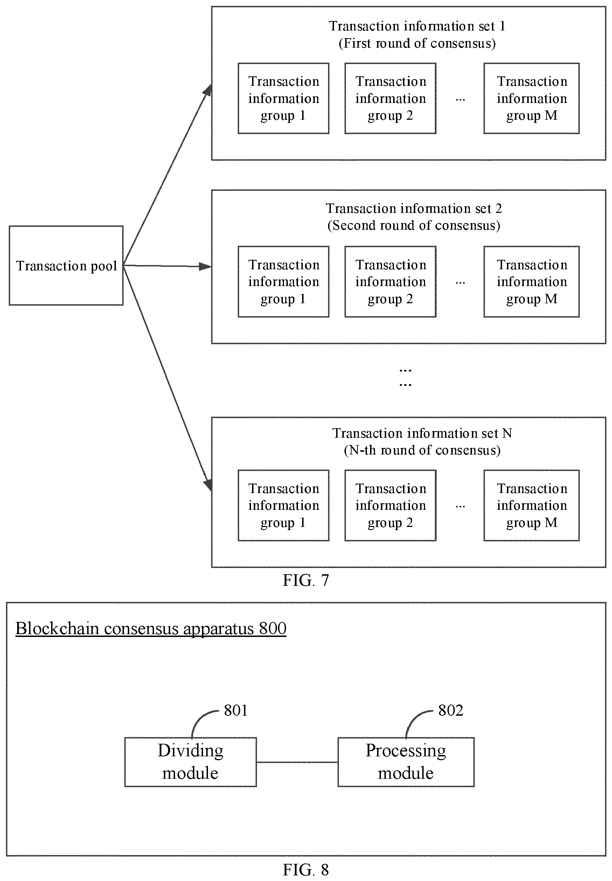

FIG. 7 is a schematic diagram of a blockchain consensus process provided by an embodiment of the present application. As shown in FIG. 7, transactions in a transaction pool are divided into N transaction information sets, and each transaction information set corresponds to a round of consensus. These N rounds of consensus can be performed in parallel, and reference may be made to the embodiment shown in FIG. 2 for details. Furthermore, for each transaction information set, transaction information in the set can be divided into M transaction information groups. For specific grouping processes, reference may be made to the embodiment shown in FIG. 5. In a transaction execution stage, transactions can be executed in parallel among the M transaction information groups, and reference may be made to the embodiment shown in FIG. 4 for details.

It should be noted that in the present embodiment, the number of transaction information groups divided for each transaction information set may be the same or different. FIG. 7 illustrate a case where each transaction information set is divided into M transaction information groups, and in practical applications, the number of transaction information groups divided for each transaction information set may be different.

In the blockchain consensus method provided in the present embodiment, within a possible range, consensus on some single transactions are not performed, but transactions are grouped and consensus are performed in batches as much as possible. When a batch of transactions meets a consensus condition, these transactions are grouped, and transactions having a dependency relationship are grouped into one group, in this way, multiple groups are formed. Since there is no dependency relationship among groups, the consensus node can perform consensus on the multiple groups in parallel, which increases the consensus efficiency.

The blockchain consensus method provided in the present embodiment not only realizes a parallel consensus processing among different transaction information sets, but also realizes a parallel transaction execution processing for each transaction information set by grouping each transaction information set, which further improves an overall performance of a blockchain network.

FIG. 8 is a structure schematic diagram of a blockchain consensus apparatus provided by an embodiment of the present application. The blockchain consensus apparatus of the present embodiment may be in a form of software and/or hardware, and the apparatus may be provided in a blockchain network as a device of a consensus node. As shown in FIG. 8, the blockchain consensus apparatus 800 provided in the present embodiment includes a dividing module 801 and a processing module 802.

The dividing module 801 is configured to divide transaction information in a transaction pool into N transaction information sets, where N is a natural number greater than 1;
the processing module 802 is configured to perform consensus on the N transaction information sets in parallel, to obtain a first consensus result corresponding to each transaction information set;
the processing module 802 is further configured to determine, according to a first consensus result corresponding to a first i transaction information set, a second consensus result corresponding to an i-th transaction information set, where i takes 1, 2, ..., N -1 and N in sequence.

In a possible implementation, the processing module 802 is specifically configured to:
judge whether a first consensus result corresponding to the i-th transaction information set is a consensus success;
if yes, determine that the second consensus result corresponding to the i-th transaction information set is a consensus success when i is equal to 1; and determine a second consensus result corresponding to the (i-1)-th transaction information set as the second consensus result corresponding to the i-th transaction information set when i is greater than 1;
if no, determine that the second consensus result corresponding to the i-th transaction information set is a consensus failure.

In a possible implementation, the processing module 802 is further configured to:
judge whether the second consensus result corresponding to the i-th transaction information set is a consensus success;
if yes, execute transaction information in the i-th transaction information set.

In a possible implementation, the processing module 802 is further configured to: group, according to an association relationship among the transaction information in the i-th transaction information set, multiple pieces of transaction information in the i-th transaction information set, to obtain M transaction information groups corresponding to the i-th transaction information set, where transaction information having an association relationship is located in a same transaction information group, and M is a natural number greater than 1; and
execute the transaction information in the M transaction information groups corresponding to the i-th transaction information set in parallel.

In a possible implementation, the transaction information includes: a transaction identifier and a pre-transaction identifier; and the processing module 802 is specifically configured to:
judge whether a first transaction information group is existed in a created transaction information group, where the first transaction information group includes a pre-transaction identifier corresponding to a transaction identifier of a j-th piece of transaction information in the i-th transaction information set;
if yes, then add the j-th piece of transaction information to the first transaction information group;
if no, add the j-th piece of transaction information to a second transaction information group, where the second transaction information group is any one of the created transaction information group or a newly created transaction information group; j takes 1, 2, ..., K in sequence, K is the number of transaction information included in the i-th transaction information set, and the transaction information in the i- th transaction information set is arranged in an ascending order of transaction time.

In a possible implementation, the processing module 802 is specifically configured to:
judge whether the number of the created transaction information group is greater than a first threshold;
if yes, then determine the second transaction information group in the created transaction information group, and add the j-th piece of transaction information to the second transaction information group;
if no, then create a new transaction information group, and add the j-th piece of transaction information to the new transaction information group, where the new transaction information group is the second transaction information group.

In a possible implementation, the processing module 802 is specifically configured to:
obtain an amount of transaction information existing in respective created transaction information group;
determine, according to the amount of the transaction information existing in respective created transaction information group, the second transaction information group in the created transaction information groups, where an amount of transaction information existing in the second transaction information group is less than a second threshold.

The blockchain consensus apparatus provided in the present embodiment can be used to execute technical solutions of any one of the above-mentioned method embodiments, implementation principles and technical effects thereof are similar, and will not be repeated herein.

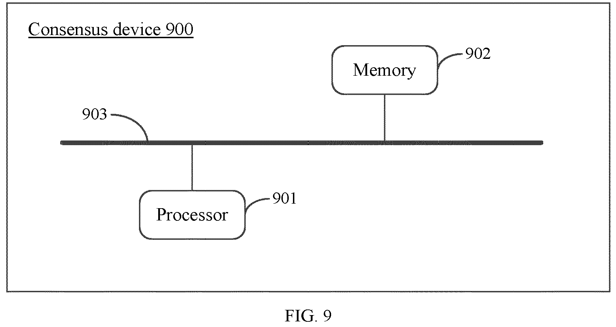

FIG. 9 is a structure schematic diagram of a consensus device provided by an embodiment of the present application. The consensus device of the present embodiment can be taken as a consensus node in a blockchain network. As shown in FIG. 9, the consensus device 900 of the present embodiment includes: a processor 901 and a memory 902; where the memory 902 is configured to store a computer program; and the processor 901 is configured to execute the computer program stored in the memory, to implement the blockchain consensus method in the above-mentioned embodiments. Reference may be made to relevant description in the foregoing method embodiments for details.

Optionally, the memory 902 may be independent, and may also be integrated with the processor 901.

When the memory 902 is a device independent of the processor 901, the consensus device 900 may also include: a bus 903 which is configured to connect the memory 902 and the processor 901.

The consensus device provided in the present embodiment can be used to execute the blockchain consensus method in any one of the above-mentioned method embodiments, implementation principles and technical effects thereof are similar, and will not be repeated here in the present embodiment.

An embodiment of the present application also provides a computer-readable storage medium including a computer program, and the computer program is configured to implement technical solutions in any one of the above-mentioned method embodiments.

An embodiment of the present application can also provide a computer program product which can be executed by a processor, technical solutions in any one of the above-mentioned method embodiments can be implemented when the computer program product is executed. Implementation principles and technical effects thereof are similar, and will not be repeated herein.

An embodiment of the present application also provides a chip, including a memory, a processor and a computer program, where the computer program is stored in the memory, and the processor runs the computer programs to execute technical solutions of any one of the above-mentioned method embodiments. Implementation principles and technical effects thereof are similar, and will not be repeated herein.

In several embodiments provided in the present application, it should be understood that the disclosed device and method may be implemented in other ways. For example, the device embodiments described above are merely illustrative, for example, a division of modules is merely a logical functional division, and there may be other division manners in practical implementations, for example, multiple modules may be combined, or may be integrated to another system, or some features may be ignored, or not be executed. In addition, the displayed or discussed mutual couplings or direct couplings or communicating connections may be indirect couplings or communicating connections through some interfaces, apparatuses or modules, and may be in electrical, mechanical or other forms.

Modules described as separate components may or may not be physically separated, and components displayed as modules may or may not be physical units, that is, they may be located in one place, or they may be distributed over multiple network units. Some or all of the modules may be selected according to practical needs to achieve objectives of solutions of the present embodiments.

In addition, each functional module in various embodiments of the present application may be integrated into one processing unit, each module may also exist alone physically, and two or more modules may also be integrated into one unit. Units formed by the above-mentioned modules may be implemented in a form of hardware, or in a form of a hardware plus software functional unit.

The above-mentioned integrated module implemented in a form of a software functional module may be stored in a computer readable storage medium. The above software functional module is stored in a storage medium, and includes several instructions to make a computer device (which can be a personal computer, a server, or a network device, etc.) or a processor to execute part steps of the methods of various embodiments of the present application.

It should be understood that the above processor may be a central processing unit (CPU), and may also be other general-purpose processors, digital signal processors (DSP), and application specific integrated circuits (ASIC), etc. The general-purpose processor may be a microprocessor or the processor may also be any conventional processor, etc. Steps of methods disclosed in conjunction with the present application may be directly embodied as to be executed by a hardware processor, or executed by a combination of hardware and software modules in a processor.

The memory may include a high-speed RAM memory, and may also include a non-volatile storage NVM, for example at least one magnetic disk storage, and may also be a USB disk, a mobile hard disk, a read-only memory, a magnetic disk, or an optical disk, etc.

The bus may be an industry standard architecture (ISA) bus, a peripheral component interconnect (PCI) bus, or an extended industry standard architecture (EISA) bus, etc. The bus may be divided into an address bus, a data bus, a control bus, etc. For ease of representation, the bus in drawings of the present application is not limited to merely one bus or one type of bus.

The above storage medium may be realized by any type of volatile or non-volatile storage device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk. The storage medium may be any available medium that may be accessed by a general-purpose or special-purpose computer.

An exemplary storage medium is coupled to a processor, so that the processor may read information from the storage medium and write information to the storage medium. It is obvious that the storage medium may also be an integral part of a processor. The processor and the storage medium may be located in an application specific integrated circuit (ASIC). It is obvious that the processor and the storage medium may also exist as discrete components in an electronic device or a main control device.

A person of ordinary skill in the art may understand that all or part of the steps in the above-mentioned method embodiments may be implemented by program instruction relevant hardware. The foregoing program may be stored in a computer readable storage medium. When the program is executed, steps including the above-mentioned method embodiments are performed; while the foregoing storage medium includes: various medium that can store program codes, such as a ROM, a RAM, a magnetic disk, or an optical disk, etc.

Finally, it should be noted that the above various embodiments are merely used for illustrating technical solutions of the present application, and not for making limitation on them; although the present application has been described in detail with reference to the foregoing various embodiments, those of ordinary skill in the art should understand that: then may still make modifications to the technical solutions described in the foregoing embodiments, or make equivalently replacements on some or all of technical features thereof; while these modifications or replacements do not make essences of corresponding technical solutions deviate from the technical solutions of various embodiments of the present application.

## Claims

1. A blockchain consensus method, wherein the method is performed by a consensus node in a blockchain system, and the method comprises:
dividing (S201, S401) transaction information in a transaction pool into N transaction information sets, wherein N is a natural number greater than 1;
performing (S202, S403) consensus on the N transaction information sets in parallel, to obtain a first consensus result corresponding to each transaction information set; and
determining (S203), according to a first consensus result corresponding to a first i transaction information set, a second consensus result corresponding to an i-th transaction information set, wherein i takes 1, 2, ..., N-1 and N in sequence;
judging whether the second consensus result corresponding to the i-th transaction information set is a consensus success;
if yes, executing transaction information in the i-th transaction information set, wherein before the executing the transaction information in the i-th transaction information set, the method further comprises:
grouping (S402), according to an association relationship among the transaction information in the i-th transaction information set, multiple pieces of transaction information in the i-th transaction information set, to obtain M transaction information groups corresponding to the i-th transaction information set, wherein transaction information having an association relationship is located in a same transaction information group, and M is a natural number greater than 1; and
the executing the transaction information in the i-th transaction information set comprises: executing (S404) the transaction information in the M transaction information groups corresponding to the i-th transaction information set in parallel.

2. The method according to claim 1, wherein the determining (S203), according to the first consensus result corresponding to the first i transaction information set, the second consensus result corresponding to the i-th transaction information set comprises:
judging whether a first consensus result corresponding to the i-th transaction information set is a consensus success;
if yes, determining that the second consensus result corresponding to the i-th transaction information set is a consensus success when i is equal to 1; and determining a second consensus result corresponding to the (i-1)-th transaction information set as the second consensus result corresponding to the i-th transaction information set when i is greater than 1;
if no, determining that the second consensus result corresponding to the i-th transaction information set is a consensus failure.

3. The method according to claim 1, wherein the transaction information comprises: a transaction identifier and a pre-transaction identifier; the grouping (S402), according to the association relationship among the transaction information in the i-th transaction information set, the multiple pieces of transaction information in the i-th transaction information set, to obtain the M transaction information groups corresponding to the i-th transaction information set comprises:
judging (S502) whether a first transaction information group is existed in a created transaction information group, wherein the first transaction information group comprises a pre-transaction identifier corresponding to a transaction identifier of a j-th piece of transaction information in the i-th transaction information set;
if yes, adding (S503) the j-th piece of transaction information to the first transaction information group;
if no, adding (S504) the j-th piece of transaction information to a second transaction information group, wherein the second transaction information group is any one of the created transaction information group or a newly created transaction information group; j takes 1, 2, ..., K in sequence, K is a number of the transaction information comprised in the i-th transaction information set, and the transaction information in the i-th transaction information set is arranged in an ascending order of transaction time.

4. The method according to claim 3, wherein the adding (S504) the j-th piece of transaction information to the second transaction information group comprises:
judging whether a number of the created transaction information group is greater than or equal to a first threshold;
if yes, determining the second transaction information group in the created transaction information group, and adding the j-th piece of transaction information to the second transaction information group;
if no, creating a new transaction information group, and adding the j-th piece of transaction information to the new transaction information group, wherein the new transaction information group is the second transaction information group.

5. The method according to claim 4, wherein the determining the second transaction information group in the created transaction information group comprises:
obtaining an amount of transaction information existing in respective created transaction information group; and
determining, according to the amount of the transaction information existing in respective created transaction information group, the second transaction information group in the created transaction information groups, wherein an amount of transaction information existing in the second transaction information group is less than a second threshold.

6. A blockchain consensus apparatus (800), comprising:
a dividing module (801), configured to divide transaction information in a transaction pool into N transaction information sets, wherein N is a natural number greater than 1;
a processing module (802), configured to perform consensus on the N transaction information sets in parallel, to obtain a first consensus result corresponding to each transaction information set;
the processing module (802) is further configured to:
determine, according to a first consensus result corresponding to a first i transaction information set, a second consensus result corresponding to an i-th transaction information set, wherein i takes 1, 2, ..., N-1 and N in sequence;
judge whether the second consensus result corresponding to the i-th transaction information set is a consensus success;
if yes, execute transaction information in the i-th transaction information set, wherein the processing module (802) is further configured, before it executes the transaction information in the i-th transaction information set to group, according to an association relationship among the transaction information in the i-th transaction information set, multiple pieces of transaction information in the i-th transaction information set, to obtain M transaction information groups corresponding to the i-th transaction information set, wherein transaction information having an association relationship is located in a same transaction information group, and M is a natural number greater than 1; and
wherein execute the transaction information in the i-th transaction information set comprises execute the transaction information in the M transaction information groups corresponding to the i-th transaction information set in parallel.

7. The blockchain consensus apparatus (800) according to claim 6, wherein the processing module (802) is further configured to:
judge whether a first consensus result corresponding to the i-th transaction information set is a consensus success;
if yes, determine that the second consensus result corresponding to the i-th transaction information set is a consensus success when i is equal to 1; and determine a second consensus result corresponding to the (i-1)-th transaction information set as the second consensus result corresponding to the i-th transaction information set when i is greater than 1;
if no, determine that the second consensus result corresponding to the i-th transaction information set is a consensus failure.

8. The blockchain consensus apparatus (800) according to claim 6, wherein the transaction information comprises: a transaction identifier and a pre-transaction identifier; and the processing module (802) is further configured to:
judge whether a first transaction information group is existed in a created transaction information group, wherein the first transaction information group comprises a pre-transaction identifier corresponding to a transaction identifier of a j-th piece of transaction information in the i-th transaction information set;
if yes, add the j-th piece of transaction information to the first transaction information group;
if no, add the j-th piece of transaction information to a second transaction information group, wherein the second transaction information group is any one of the created transaction information group or a newly created transaction information group; j takes 1, 2, ..., K in sequence, K is a number of the transaction information comprised in the i-th transaction information set, and the transaction information in the i-th transaction information set is arranged in an ascending order of transaction time.

9. A computer-readable storage medium, wherein the computer-readable storage medium comprises a computer program, and the method according to any one of claims 1 to 5 is implemented when the computer program is executed by a processor.

10. A computer program product, wherein the computer program product can be executed by a processor, and the method according to any one of claims 1 to 5 is implemented when the computer program product is executed.

11. A chip, comprising: a memory, a processor and a computer program, the computer program is stored in the memory, and the processor runs the computer program to execute the method according to any one of claims 1 to 5.

## Patentansprüche

1. Konsensverfahren einer Blockchain, wobei das Verfahren durch einen Konsensknoten in einem Blockchain-System durchgeführt wird und das Verfahren Folgendes umfasst:
Teilen (S201, S401) von Transaktionsinformationen in einem Transaktionspool in N Transaktionsinformationssätze, wobei N eine natürliche Zahl größer als 1 ist;
paralleles Durchführen (S202, S403) eines Konsenses über die N Transaktionsinformationssätze, um ein erstes Konsensergebnis zu erlangen, das jedem Transaktionsinformationssatz entspricht; und
Bestimmen (S203), gemäß einem ersten Konsensergebnis, das einem ersten i Transaktionsinformationssatz entspricht, eines zweiten Konsensergebnisses, das einem i-ten Transaktionsinformationssatz entspricht, wobei i nacheinander 1, 2 ... N-1 und N annimmt;
Beurteilen, ob das zweite Konsensergebnis, das dem i-ten Transaktionsinformationssatz entspricht, ein Konsenserfolg ist;
wenn ja, Ausführen von Transaktionsinformationen in dem i-ten Transaktionsinformationssatz, wobei das Verfahren vor dem Ausführen der Transaktionsinformationen in dem i-ten Transaktionsinformationssatz ferner Folgendes umfasst:
Gruppieren (S402), gemäß einer Zuordnungsbeziehung zwischen den Transaktionsinformationen in dem i-ten Transaktionsinformationssatz, mehrerer Transaktionsinformationselemente in dem i-ten Transaktionsinformationssatz, um M Transaktionsinformationsgruppen, die dem i-ten Transaktionsinformationssatz entsprechen, zu erlangen, wobei sich Transaktionsinformationen, die eine Zuordnungsbeziehung aufweisen, in einer gleichen Transaktionsinformationsgruppe befinden und M eine natürliche Zahl größer als 1 ist; und wobei das Ausführen der Transaktionsinformationen in dem i-ten Transaktionsinformationssatz Folgendes umfasst:
paralleles Ausführen (S404) der Transaktionsinformationen in den M Transaktionsinformationsgruppen, die dem i-ten Transaktionsinformationssatz entsprechen.

2. Verfahren nach Anspruch 1, wobei das Bestimmen (S203), gemäß dem ersten Konsensergebnis, das dem ersten i Transaktionsinformationssatz entspricht, des zweiten Konsensergebnisses, das dem i-ten Transaktionsinformationssatz entspricht, Folgendes umfasst:
Beurteilen, ob ein erstes Konsensergebnis, das dem i-ten Transaktionsinformationssatz entspricht, ein Konsenserfolg ist;
wenn ja, Bestimmen, dass das zweite Konsensergebnis, das dem i-ten Transaktionsinformationssatz entspricht, ein Konsenserfolg ist, wenn i gleich 1 ist; und Bestimmen eines zweiten Konsensergebnisses, das dem (i-1)-ten Transaktionsinformationssatz entspricht, als das zweite Konsensergebnis, das dem i-ten Transaktionsinformationssatz entspricht, wenn i größer als 1 ist;
wenn nein, Bestimmen, dass das zweite Konsensergebnis, das dem i-ten Transaktionsinformationssatz entspricht, ein Konsensfehler ist.

3. Verfahren nach Anspruch 1, wobei die Transaktionsinformationen Folgendes umfassen: einen Transaktionsidentifikator und einen Vortransaktionsidentifikator; wobei das Gruppieren (S402), gemäß der Zuordnungsbeziehung zwischen den Transaktionsinformationen in dem i-ten Transaktionsinformationssatz, der mehreren Transaktionsinformationselemente in dem i-ten Transaktionsinformationssatz, um die M Transaktionsinformationsgruppen, die dem i-ten Transaktionsinformationssatz entsprechen, zu erlangen, Folgendes umfasst:
Beurteilen (S502), ob eine erste Transaktionsinformationsgruppe in einer erstellten Transaktionsinformationsgruppe ist vorhanden war, wobei die erste Transaktionsinformationsgruppe einen Vortransaktionsidentifikator, der einem Transaktionsidentifikator eines j-ten Transaktionsinformationselements in dem i-ten Transaktionsinformationssatz entspricht, umfasst;
wenn ja, Hinzufügen (S503) des j-ten Transaktionsinformationselements zu der ersten Transaktionsinformationsgruppe;
wenn nein, Hinzufügen (S504) des j-ten Transaktionsinformationselements zu einer zweiten Transaktionsinformationsgruppe, wobei die zweite Transaktionsinformationsgruppe eine beliebige der erstellten Transaktionsinformationsgruppe oder einer neu erstellten Transaktionsinformationsgruppe ist; j nacheinander 1, 2 ... K annimmt, K eine Anzahl der Transaktionsinformationen ist, die in dem i-ten Transaktionsinformationssatz umfasst sind, und die Transaktionsinformationen in dem i-ten Transaktionsinformationssatz in einer aufsteigenden Reihenfolge der Transaktionszeit angeordnet sind.

4. Verfahren nach Anspruch 3, wobei das Hinzufügen (S504) des j-ten Transaktionsinformationselements zu der zweiten Transaktionsinformationsgruppe Folgendes umfasst:
Beurteilen, ob eine Anzahl der erstellten Transaktionsinformationsgruppe größer als ein erster Schwellenwert oder gleich diesem ist;
wenn ja, Bestimmen der zweiten Transaktionsinformationsgruppe in der erstellten Transaktionsinformationsgruppe und Hinzufügen des j-ten Transaktionsinformationselements zu der zweiten Transaktionsinformationsgruppe;
wenn nein, Erstellen einer neuen Transaktionsinformationsgruppe und Hinzufügen des j-ten Transaktionsinformationselements zu der neuen Transaktionsinformationsgruppe, wobei die neue Transaktionsinformationsgruppe die zweite Transaktionsinformationsgruppe ist.

5. Verfahren nach Anspruch 4, wobei das Bestimmen der zweiten Transaktionsinformationsgruppe in der erstellten Transaktionsinformationsgruppe Folgendes umfasst:
Erlangen einer Menge von Transaktionsinformationen, die in einer jeweiligen erstellten Transaktionsinformationsgruppe vorhanden ist; und
Bestimmen, gemäß der Menge von Transaktionsinformationen, die in einer jeweiligen erstellten Transaktionsinformationsgruppe vorhanden ist, der zweiten Transaktionsinformationsgruppe in den erstellten Transaktionsinformationsgruppen, wobei eine Menge von Transaktionsinformationen, die in der zweiten Transaktionsinformationsgruppe vorhanden ist, kleiner als ein zweiter Schwellenwert ist.

6. Konsenseinrichtung (800) einer Blockchain, umfassend:
ein Teilungsmodul (801), das dazu konfiguriert ist, Transaktionsinformationen in einem Transaktionspool in N Transaktionsinformationssätze zu teilen, wobei N eine natürliche Zahl größer als 1 ist;
ein Verarbeitungsmodul (802), das dazu konfiguriert ist, einen Konsens über die N Transaktionsinformationssätze parallel durchzuführen, um ein erstes Konsensergebnis zu erlangen, das jedem Transaktionsinformationssatz entspricht;
wobei das Verarbeitungsmodul (802) ferner zu Folgendem konfiguriert ist:
Bestimmen, gemäß einem ersten Konsensergebnis, das einem ersten i Transaktionsinformationssatz entspricht, eines zweiten Konsensergebnisses, das einem i-ten Transaktionsinformationssatz entspricht, wobei i nacheinander 1, 2 ... N-1 und N annimmt;
Beurteilen, ob das zweite Konsensergebnis, das dem i-ten Transaktionsinformationssatz entspricht, ein Konsenserfolg ist;
wenn ja, Ausführen von Transaktionsinformationen in dem i-ten Transaktionsinformationssatz, wobei das Verarbeitungsmodul (802) ferner vor dem Ausführen der Transaktionsinformationen in dem i-ten Transaktionsinformationssatz zum Gruppieren, gemäß einer Zuordnungsbeziehung zwischen den Transaktionsinformationen in dem i-ten Transaktionsinformationssatz, mehrerer Transaktionsinformationselemente in dem i-ten Transaktionsinformationssatz, um M Transaktionsinformationsgruppen, die dem i-ten Transaktionsinformationssatz entsprechen, zu erlangen, konfiguriert ist, wobei sich Transaktionsinformationen, die eine Zuordnungsbeziehung aufweisen, in einer gleichen Transaktionsinformationsgruppe befinden und M eine natürliche Zahl größer als 1 ist; und
wobei das Ausführen der Transaktionsinformationen in dem i-ten Transaktionsinformationssatz paralleles Ausführen der Transaktionsinformationen in den M Transaktionsinformationsgruppen, die dem i-ten Transaktionsinformationssatz entsprechen, umfasst.

7. Konsenseinrichtung (800) einer Blockchain nach Anspruch 6, wobei das Verarbeitungsmodul (802) ferner zu Folgendem konfiguriert ist:
Beurteilen, ob ein erstes Konsensergebnis, das dem i-ten Transaktionsinformationssatz entspricht, ein Konsenserfolg ist;
wenn ja, Bestimmen, dass das zweite Konsensergebnis, das dem i-ten Transaktionsinformationssatz entspricht, ein Konsenserfolg ist, wenn i gleich 1 ist; und Bestimmen eines zweiten Konsensergebnisses, das dem (i-1)-ten Transaktionsinformationssatz entspricht, als das zweite Konsensergebnis, das dem i-ten Transaktionsinformationssatz entspricht, wenn i größer als 1 ist;
wenn nein, Bestimmen, dass das zweite Konsensergebnis, das dem i-ten Transaktionsinformationssatz entspricht, ein Konsensfehler ist.

8. Konsenseinrichtung (800) einer Blockchain nach Anspruch 6, wobei die Transaktionsinformationen Folgendes umfassen: einen Transaktionsidentifikator und einen Vortransaktionsidentifikator; und das Verarbeitungsmodul (802) ferner zu Folgendem konfiguriert ist:
Beurteilen , ob eine erste Transaktionsinformationsgruppe in einer erstellten Transaktionsinformationsgruppe ist vorhanden war, wobei die erste Transaktionsinformationsgruppe einen Vortransaktionsidentifikator, der einem Transaktionsidentifikator eines j-ten Transaktionsinformationselements in dem i-ten Transaktionsinformationssatz entspricht, umfasst;
wenn ja, Hinzufügen des j-ten Transaktionsinformationselements zu der ersten Transaktionsinformationsgruppe;
wenn nein, Hinzufügen des j-ten Transaktionsinformationselements zu einer zweiten Transaktionsinformationsgruppe, wobei die zweite Transaktionsinformationsgruppe eine beliebige der erstellten Transaktionsinformationsgruppe oder einer neu erstellten Transaktionsinformationsgruppe ist; j nacheinander 1, 2 ... K annimmt, K eine Anzahl der Transaktionsinformationen ist, die in dem i-ten Transaktionsinformationssatz umfasst sind, und die Transaktionsinformationen in dem i-ten Transaktionsinformationssatz in einer aufsteigenden Reihenfolge der Transaktionszeit angeordnet sind.

9. Computerlesbares Speichermedium, wobei das computerlesbare Speichermedium ein Computerprogramm umfasst und das Verfahren nach einem der Ansprüche 1 bis 5 umgesetzt wird, wenn das Computerprogramm durch einen Prozessor ausgeführt wird.

10. Computerprogrammprodukt, wobei das Computerprogrammprodukt durch einen Prozessor ausgeführt werden kann und das Verfahren nach einem der Ansprüche 1 bis 5 umgesetzt wird, wenn das Computerprogrammprodukt ausgeführt wird.

11. Chip, umfassend: einen Speicher, einen Prozessor und ein Computerprogramm, wobei das Computerprogramm in dem Speicher gespeichert ist und der Prozessor das Computerprogramm ausführt, um das Verfahren nach einem der Ansprüche 1 bis 5 auszuführen.

## Revendications

1. Procédé de consensus pour chaîne de blocs, dans lequel le procédé est réalisé par un nœud de consensus dans un système de chaîne de blocs, et le procédé comprend :
la division (S201, S401) d'informations de transaction dans un groupe de transactions en N ensembles d'informations de transaction, dans lequel N est un entier naturel supérieur à 1 ;
la réalisation (S202, S403) d'un consensus sur les N ensembles d'informations de transaction en parallèle, pour obtenir un premier résultat de consensus correspondant à chaque ensemble d'informations de transaction ; et
la détermination (S203), selon un premier résultat de consensus correspondant à un premier i ensemble d'informations de transaction, d'un second résultat de consensus correspondant à un i-ème ensemble d'informations de transaction, dans lequel i correspond à 1, 2,..., N-1 et N en séquence ;
la vérification si le second résultat de consensus correspondant au i-ème ensemble d'informations de transaction est un succès de consensus ;
si oui, l'exécution d'informations de transaction dans le i-ème ensemble d'informations de transaction, dans lequel avant l'exécution des informations de transaction dans le i-ème ensemble d'informations de transaction, le procédé comprend en outre :
le groupement (S402), selon une relation d'association parmi les informations de transaction dans le i-ème ensemble d'informations de transaction, de multiples éléments d'informations de transaction dans le i-ème ensemble d'informations de transaction, pour obtenir M groupes d'informations de transaction correspondant au i-ème ensemble d'informations de transaction, dans lequel des informations de transaction ayant une relation d'association sont situées dans un même groupe d'informations de transaction, et M est un entier naturel supérieur à 1 ; et l'exécution des informations de transaction dans le i-ème ensemble d'informations de transaction comprend :
l'exécution (S404) des informations de transaction dans les M groupes d'informations de transaction correspondant au i-ème ensemble d'informations de transaction en parallèle.

2. Procédé selon la revendication 1, dans lequel la détermination (S203), selon le premier résultat de consensus correspondant au premier i ensemble d'informations de transaction, du second résultat de consensus correspondant au i-ème ensemble d'informations de transaction comprend :
la vérification si un premier résultat de consensus correspondant au i-ème ensemble d'informations de transaction est un succès de consensus ;
si oui, la détermination que le second résultat de consensus correspondant au i-ème ensemble d'informations de transaction est un succès de consensus lorsque i est égal à 1 ; et la détermination d'un second résultat de consensus correspondant au (i-1)-ème ensemble d'informations de transaction en tant que second résultat de consensus correspondant au i-ème ensemble d'informations de transaction lorsque i est supérieur à 1 ;
si non, la détermination que le second résultat de consensus correspondant au i-ème ensemble d'informations de transaction est un échec de consensus.

3. Procédé selon la revendication 1, dans lequel les informations de transaction comprennent : un identifiant de transaction et un identifiant de pré-transaction ; le groupement (S402), selon la relation d'association parmi les informations de transaction dans le i-ème ensemble d'informations de transaction, des multiples éléments d'informations de transaction dans le i-ème ensemble d'informations de transaction, pour obtenir les M groupes d'informations de transaction correspondant au i-ème ensemble d'informations de transaction comprend :
la vérification (S502) si un premier groupe d'informations de transaction existe dans un groupe d'informations de transaction créé, dans lequel le premier groupe d'informations de transaction comprend un identifiant de pré-transaction correspondant à un identifiant de transaction d'un j-ème élément d'informations de transaction dans le i-ème ensemble d'informations de transaction ;
si oui, l'ajout (S503) du j-ème élément d'informations de transaction au premier groupe d'informations de transaction ;
si non, l'ajout (S504) du j-ème élément d'informations de transaction à un second groupe d'informations de transaction, dans lequel le second groupe d'informations de transaction est l'un quelconque du groupe d'informations de transaction créé ou d'un groupe d'informations de transaction nouvellement créé ; j correspond à 1, 2,..., K en séquence, K est un nombre des informations de transaction comprises dans le i-ème ensemble d'informations de transaction, et les informations de transaction dans le i-ème ensemble d'informations de transaction sont agencées dans un ordre croissant de temps de transaction.

4. Procédé selon la revendication 3, dans lequel l'ajout (S504) du j-ème élément d'informations de transaction au second groupe d'informations de transaction comprend :
la vérification si un nombre du groupe d'informations de transaction créé est supérieur ou égal à un premier seuil ;
si oui, la détermination du second groupe d'informations de transaction dans le groupe d'informations de transaction créé, et l'ajout du j-ème élément d'informations de transaction au second groupe d'informations de transaction ;
si non, la création d'un nouveau groupe d'informations de transaction, et l'ajout du j-ème élément d'informations de transaction au nouveau groupe d'informations de transaction, dans lequel le nouveau groupe d'informations de transaction est le second groupe d'informations de transaction.

5. Procédé selon la revendication 4, dans lequel la détermination du second groupe d'informations de transaction dans le groupe d'informations de transaction créé comprend :
l'obtention d'une quantité d'informations de transaction existant dans un groupe d'informations de transaction créé respectif ; et
la détermination, selon la quantité des informations de transaction existant dans un groupe d'informations de transaction créé respectif, du second groupe d'informations de transaction dans les groupes d'informations de transaction créés, dans lequel une quantité d'informations de transaction existant dans le second groupe d'informations de transaction est inférieure à un second seuil.

6. Appareil de consensus pour chaîne de blocs (800), comprenant :
un module de division (801), configuré pour diviser des informations de transaction dans un groupe de transactions en N ensembles d'informations de transaction, dans lequel N est un entier naturel supérieur à 1 ;
un module de traitement (802), configuré pour réaliser un consensus sur les N ensembles d'informations de transaction en parallèle, pour obtenir un premier résultat de consensus correspondant à chaque ensemble d'informations de transaction ;
le module de traitement (802) est en outre configuré pour :
déterminer, selon un premier résultat de consensus correspondant à un premier i ensemble d'informations de transaction, un second résultat de consensus correspondant à un i-ème ensemble d'informations de transaction, dans lequel i correspond à 1, 2,..., N-1 et N en séquence ;
vérifier si le second résultat de consensus correspondant au i-ème ensemble d'informations de transaction est un succès de consensus ;
si oui, exécuter des informations de transaction dans le i-ème ensemble d'informations de transaction, dans lequel le module de traitement (802) est en outre configuré, avant d'exécuter les informations de transaction dans le i-ème ensemble d'informations de transaction, pour grouper, selon une relation d'association parmi les informations de transaction dans le i-ème ensemble d'informations de transaction, de multiples éléments d'informations de transaction dans le i-ème ensemble d'informations de transaction, pour obtenir M groupes d'informations de transaction correspondant au i-ème ensemble d'informations de transaction, dans lequel des informations de transaction ayant une relation d'association sont situées dans un même groupe d'informations de transaction, et M est un entier naturel supérieur à 1 ; et
dans lequel exécuter les informations de transaction dans le i-ème ensemble d'informations de transaction comprend exécuter les informations de transaction dans les M groupes d'informations de transaction correspondant au i-ème ensemble d'informations de transaction en parallèle.

7. Appareil de consensus pourchaîne de blocs (800) selon la revendication 6, dans lequel le module de traitement (802) est en outre configuré pour :
vérifier si un premier résultat de consensus correspondant au i-ème ensemble d'informations de transaction est un succès de consensus ;
si oui, déterminer que le second résultat de consensus correspondant au i-ème ensemble d'informations de transaction est un succès de consensus lorsque i est égal à 1 ; et déterminer un second résultat de consensus correspondant au (i-1)-ème ensemble d'informations de transaction en tant que second résultat de consensus correspondant au i-ème ensemble d'informations de transaction lorsque i est supérieur à 1 ;
si non, déterminer que le second résultat de consensus correspondant au i-ème ensemble d'informations de transaction est un échec de consensus.

8. Appareil de consensus pour chaîne de blocs (800) selon la revendication 6, dans lequel les informations de transaction comprennent : un identifiant de transaction et un identifiant de pré-transaction ; et le module de traitement (802) est en outre configuré pour :
vérifier si un premier groupe d'informations de transaction existe dans un groupe d'informations de transaction créé, dans lequel le premier groupe d'informations de transaction comprend un identifiant de pré-transaction correspondant à un identifiant de transaction d'un j-ème élément d'informations de transaction dans le i-ème ensemble d'informations de transaction ;
si oui, ajouter le j-ème élément d'informations de transaction au premier groupe d'informations de transaction ;
si non, ajouter le j-ème élément d'informations de transaction à un second groupe d'informations de transaction, dans lequel le second groupe d'informations de transaction est l'un quelconque du groupe d'informations de transaction créé ou d'un groupe d'informations de transaction nouvellement créé ; j correspond à 1, 2,..., K en séquence, K est un nombre des informations de transaction comprises dans le i-ème ensemble d'informations de transaction, et les informations de transaction dans le i-ème ensemble d'informations de transaction sont agencées dans un ordre croissant de temps de transaction.

9. Support de stockage lisible par ordinateur, dans lequel le support de stockage lisible par ordinateur comprend un programme informatique, et le procédé selon l'une quelconque des revendications 1 à 5 est mis en œuvre lorsque le programme informatique est exécuté par un processeur.

10. Produit-programme informatique, dans lequel le produit de programme informatique peut être exécuté par un processeur, et le procédé selon l'une quelconque des revendications 1 à 5 est mis en œuvre lorsque le produit de programme informatique est exécuté.

11. Puce, comprenant : une mémoire, un processeur et un programme informatique, le programme informatique est stocké dans la mémoire, et le processeur exécute le programme informatique pour réaliser le procédé selon l'une quelconque des revendications 1 à 5.
